(19) Europäisches Patentamt
European Patent Office
Office européen des brevets

(11) Numéro de publication : **0 350 409 B1**

(12)

# FASCICULE DE BREVET EUROPEEN

(45) Date de publication du fascicule du brevet :
09.10.91 Bulletin 91/41

(51) Int. Cl.⁵ : **G01N 21/33**, G01N 15/06, G01N 21/88

(21) Numéro de dépôt : 89401961.1

(22) Date de dépôt : 07.07.89

(54) Dispositif de mesure de l'empoussièrement d'une surface.

(30) Priorité : 08.07.88 FR 8809342

(43) Date de publication de la demande :
10.01.90 Bulletin 90/02

(45) Mention de la délivrance du brevet :
09.10.91 Bulletin 91/41

(84) Etats contractants désignés :
BE CH DE LI LU NL

(56) Documents cités :
DE-B- 1 274 384
FR-A- 1 524 475
GB-A- 419 121
GB-A- 822 447
US-A- 3 770 356
PATENT ABSTRACTS OF JAPAN, vol. 10, no.
111, (P-451)[2168], 25 avril 1986, page 27 P 451;
& JP-A-60 242 344

(73) Titulaire : DOSIM DEVELOPPEMENT S.A.
Rue Jean-Jaquet 10
CH-1201 Genève (CH)

(72) Inventeur : Lefebve, Gérard
17 rue de la Roche
F-60270 Gouvieux (FR)
Inventeur : Bouyssarie, François
34 avenue de Provence
F-78140 Velizy (FR)
Inventeur : Lehoucq, Philippe
17 rue du Général de Gaulle Billy Berclau
F-62138 Haisnes (FR)

(74) Mandataire : Robert, Jean-Pierre et al
CABINET BOETTCHER 23, rue la Boétie
F-75008 Paris (FR)

## Description

La présente invention concerne un dispositif de mesure du degré d'empoussièrement d'une surface.

Il existe au moins un moyen pour apprécier le degré d'empoussièrement d'une surface, qui consiste à déplacer sur celle-ci un tampon approprié, et de comparer le degré de salissure de ce tampon à des valeurs de référence. Ce moyen est décrit dans EP-A-0319438 (date de priorité 09/11/87, date de publication, 07/06/89).

Parce que le tampon, par construction, comporte une succession de lames élastiques qui coopèrent avec une étoffe, le degré de salissure s'apprécie par le nombre de traits marqués sur l'étoffe par la poussière collectée au droit des lames élastiques. Ce dispositif connu présente cependant une limite à son utilisation, car on constate une absence de sensibilité, voire une impossibilité de mesure dans le cas d'empoussièrement faible.

La présente invention se propose de permettre de qualifier l'empoussièrement d'une surface de manière différente, par un dispositif de comptage du nombre de particules par unité de surface.

En comparant les mesures réalisées par le dispositif selon l'invention et celles réalisées par le dispositif connu, sur des surfaces artificiellement empoussiérées de manière contrôlée et connue, on a mis en évidence une relation entre elles qui a permis d'étendre la plage d'investigation des surfaces empoussiérées notamment dans la zone des empoussièrements faibles, et ainsi de mettre au point des mesures fiables applicables aux salles blanches ou enceintes à empoussièrement contrôlé. Ces mesures permettent alors de procéder, en plus des contrôles systématiques, à des études de population et d'évolution de cette population en fonction des changements du milieu pour pouvoir prendre en compte, en termes de probabilité, dans la détermination des risques de contamination d'une atmosphère, le degré d'empoussièrement de la ou des surfaces qui la confinent.

A cet effet, l'invention a donc pour objet un dispositif de mesure du degré d'empoussièrement d'une surface qui comprend un masque plan en forme de cadre délimitant une portion déterminée de la surface à étudier lorsqu'il est posé sur elle, et une source de lumière ultra-violette émettant en direction de la portion de surface un faisceau incliné sur cette surface entre 30 et 60° d'angle.

On sait qu'une surface significative doit être environ égale à 100 cm². En revanche, le comptage notamment visuel de points lumineux sur une surface aussi grande est très délicat. Aussi, le masque selon l'invention comporte-t-il quatre fenêtres identiques, chacune d'elles ayant une surface d'environ 25 cm².

Dans un mode de réalisation préféré de l'invention, ce dispositif comporte un boîtier dont la base porte le masque susdit, l'une de ses parois latérales étant équipée d'un support pour la source de lumière ultra-violette dont l'axe est incliné par rapport au plan du masque d'un angle compris entre 30 et 60°, tandis qu'une paroi parallèle au masque comporte une ouverture d'observation du rayonnement visible émis par les particules se trouvant sur la portion de surface observée, en réponse au rayonnement incident ultra-violet.

Afin de bien distinguer la portion de surface à observer, les ouvertures du masque seront bordées d'un élément de délimitation rendu visible sous l'éclairage ultra-violet.

D'autres caractéristiques et avantages de l'invention apparaitront à la lecture de la description donnée ci-après d'un mode de réalisation.

Il sera fait référence aux dessins annexés dans lesquels :
— la figure 1 est une vue schématique illustrant le principe mis en oeuvre dans le dispositif selon l'invention,
— la figure 2 est une vue schématique d'un mode de réalisation possible du dispositif de l'invention.

En se reportant à ces figures, on voit une surface 1 dont au moins une portion 1a est visible au travers d'une fenêtre 2a ménagée dans un masque 2. Cette portion de surface 1a est éclairée au moyen d'une source 3 de lumière noire (rayonnement ultra-violet compris entre 320 et 380 nanomètres), le faisceau issu de la lumière 3 étant incliné par rapport à la surface 1 d'un angle A. Cet angle sera de préférence compris entre 30 et 60°, et sera réglé selon que l'on observe la portion de surface 1a à l'oeil nu ou que l'on en prend des photographies. En effet, on s'est rendu compte que inclinaison optimale pour une observation à l'oeil nu correspond à un angle A de 30°, alors que pour prendre un cliché il convient plutôt d'incliner le faisceau incident sur la surface 1 d'un angle A compris entre 45 et 60°.

Les particules de poussière 4 éclairées par le faisceau de lumière noire issue de la source 3, émettent un rayonnement visible, notamment dans une direction sensiblement normale à la surface 1. Ainsi peut-on détecter par des points brillants, les particules 4 situées sur la surface 1. On peut donc compter ces particules et en rapporter leur nombre aux dimensions de la surface 1a découverte par le masque 2. On signalera que la taille minimale des particules ainsi détectées est de l'ordre de 0,5 microns.

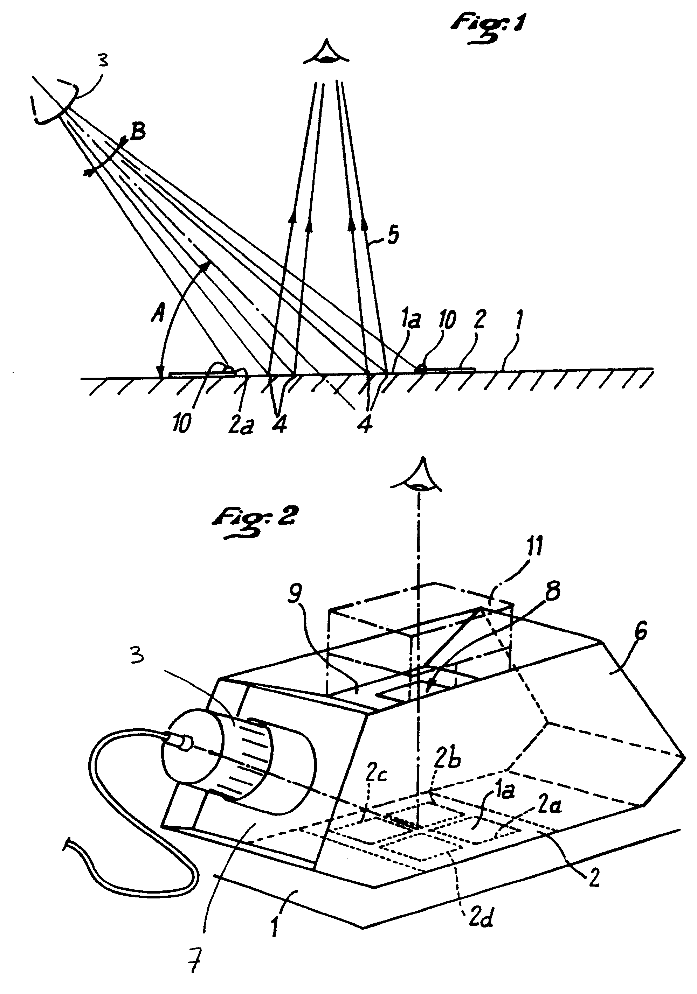

On s'est rendu compte expérimentalement que la surface d'observation possédait une taille critique en dessous de laquelle le nombre de particules par unité de surface n'était pas représentatif de l'empoussièrement réel de la surface. Cette valeur critique se situe autour de 100 cm². Cependant, le comptage à l'oeil nu des particules présentes sur une surface aussi grande est difficile et source d'erreurs nombreuses. C'est pourquoi, comme cela est visible à la figure 2, le masque 2 possède quatre fenêtres 2a, 2b, 2c et 2d de sensiblement 25 cm$^2$ chacune. L'opérateur a alors beaucoup plus de facilité à compter sur chacune des surfaces découvertes par les fenêtres, le nombre de particules qui sont présentes. Il lui suffit alors soit de faire la moyenne des quatre résultats qu'il a obtenus et de rapporter cette moyenne à 25 cm$^2$, soit de les additionner et de rapporter la somme à 100 cm$^2$.

On voit, sur la figure 2, que le masque 2 constitue la base d'un boitier 6 qui comporte des éléments 7 de support de la source lumineuse 3, dans une inclinaison appropriée pour éclairer les quatre portions de la surface 1 découverte par les fenêtres 2a à 2d du masque 2. Ce boitier 6 est totalement fermé à l'exception d'une ouverture 8 ménagée dans une paroi 9 parallèle au masque 2, ouverture qui permet l'observation des portions de surface éclairées. On peut disposer sur cette paroi 9 différents diaphragmes, c'est-à-dire différentes portions de panneaux mobiles pourvus d'une ouverture permettant d'une part par sa position et d'autre part, par ses dimensions de sélectionner la fenêtre à observer pour une position de l'oeil toujours identique. Chacune des fenêtres 2a à 2d sera avantageusement bordée d'une marque 10 devenant visible sous un éclairement en lumière noire, afin de délimiter nettement pour l'observateur l'intérieur de chacune des fenêtres. Cette disposition peut être en effet pratique, car la couleur et la nature du revêtement de la surface 1 peut engendrer une confusion avec la surface du masque lui-même.

On a représenté schématiquement sur cette figure 2, des moyens pour assujettir en regard de l'ouverture 8 un appareil photographique 11 permettant de prendre des clichés de l'ensemble des quatre fenêtres du masque, pour en permettre une exploitation ultérieure. On rappellera à ce propos que le support 7 devra présenter un axe général d'inclinaison orienté plus directement vers le masque 2, l'angle A devant être compris entre 45 et 60° pour éviter l'apparition sur le cliché de taches claires nuisant à la lecture et au comptage des taches résultant de la présence de grains de poussière.

L'appareil selon l'invention pourra avantageusement soit être construit en deux versions l'une pour l'observation à l'oeil nu, l'autre pour la prise de clichés, ou comporter des moyens pour adapter l'inclinaison du faisceau d'éclairement par rapport au masque 2.

A titre d'exemple non limitatif, on donnera ci-après les caractéristiques d'un appareil expérimental.

Cet appareil est inscrit dans un parallélépipède mesurant 490 × 170 × 190 mm. Il a été construit en acier peint en noir mat. L'ampoule utilisée comme source de lumière noire possède une puissance de 100 watts et un réflecteur interne tel que l'angle B du faisceau qu'elle émet est de l'ordre de 6,5°. Devant cette ampoule, on obtiendra de la lumière noire par mise en place d'un filtre adéquat. La longueur d'onde de la lampe utilisée est de 365 nanomètres.

## Revendications

1. Dispositif de mesure du degré d'empoussièrement d'une surface (1) par comptage de particules caractérisé en ce qu'il comprend un masque plan (2) en forme de cadre délimitant une portion déterminée (1a) de la surface (1) à étudier lorsqu'il est posé sur elle, et une source de lumière (3) ultra-violette émettant en direction de la portion de surface (1a) un faisceau incliné sur cette surface (1) d'un angle A compris entre 30 et 60°.

2. Dispositif selon la revendication 1 caractérisé en ce que le masque (2) comporte quatre fenêtres (2a, 2b, 2c, 2d) identiques.

3. Dispositif selon la revendication 2 caractérisé en ce que la surface de chacune des fenêtres (2a, 2b, 2c, 2d) est d'environ 25 cm$^2$.

4. Dispositif selon l'une quelconque des revendications précédentes caractérisé en ce qu'il comprend un boîtier (6) dont la base porte le masque (2) susdit, l'une de ses parois étant équipée d'un support (7) pour la source de lumière (3) ultra-violette dont l'axe est incliné par rapport au plan du masque (2) d'un angle compris entre 30 et 60°, tandis qu'une paroi (9) parallèle au masque (2) comporte une ouverture (8) d'observation du rayonnement visible émis par les particules (4) situées sur la portion de surface observée, dans une direction sensiblement normale à celle-ci, en réponse au rayonnement incident ultra-violet (3).

5. Dispositif selon la revendication 4 caractérisé en ce que l'ouverture d'observation ménagée dans le boîtier comporte des moyens de réglage de sa dimension.

6. Dispositif selon la revendication 4, caractérisé en ce que le boîtier (6) comporte au niveau de son ouverture (8) d'observation des moyens de fixation pour un appareil de prise de vues (11).

7. Dispositif selon l'une quelconque des revendications précédentes caractérisé en ce que chaque fenêtre (2a, 2b, 2c, 2d) du masque (2) est bordée d'une marque (10), visible sous l'éclairage ultra-violet.

8. Dispositif selon l'une quelconque des revendications précédentes caractérisé en ce que la longueur d'onde de la source (3) de lumière ultra-violette est comprise entre 320 et 380 nanomètres.

## Patentansprüche

1. Vorrichtung zur Messung des Bestaubungsgrades einer Oberfläche (1) durch Zählen von Partikeln dadurch **gekennzeichnet**, daß sie eine ebene Maske (2) in Form eines Rahmens, der einen bestimmten Abschnitt (1a) der zu untersuchenden Oberfläche (1) begrenzt, wenn er auf diese aufgelegt wird, und eine Ultraviolett-Lichtquelle (3) umfaßt, die in Richtung des Oberflächenabschnittes (1a) ein Strahlenbündel abstrahlt, das gegenüber dieser Fläche (1) unter einem Winkel (A) zwischen 30 und 60° geneigt ist.

2. Vorrichtung nach Anspruch 1, dadurch **gekennzeichnet**, daß die Maske (2) vier identische Fenster (2a, 2b, 2c, 2d) aufweist.

3. Vorrichtung nach Anspruch 2, dadurch **gekennzeichnet**, daß die Fläche jedes Fensters (2a, 2b, 2c, 2d) ungefähr 25 cm² beträgt.

4. Vorrichtung nach einem der vorhergehenden Ansprüche, dadurch **gekennzeichnet**, daß sie ein Gehäuse (6) umfaßt, dessen Basis die genannte Maske (2) trägt, wobei eine seiner Wände mit einer Halterung (7) für die Ultraviolett-Lichtquelle (3) versehen ist, deren Achse bezüglich der Ebene der Maske (2) unter einem Winkel zwischen 30 und 60° geneigt ist, während eine zur Maske (2) parallele Wand (9) eine Öffnung (8) hat zur Beobachtung der von den in dem betrachteten Oberflächenabschnitt gelegenen Teilchen infolge der einfallenden Ultraviolettstrahlung (3) in einer zur betrachteten Oberfläche im wesentlichen normalen Richtung ausgesandten sichtbaren Strahlung.

5. Vorrichtung nach Anspruch 4, dadurch **gekennzeichnet**, daß die in dem Gehäuse ausgebildete Beobachtungsöffnung Mittel zur Einstellung ihrer Abmessungen aufweist.

6. Vorrichtung nach Anspruch 4, dadurch **gekennzeichnet**, daß das Gehäuse (6) auf Höhe seiner Beobachtungsöffnung (8) Mittel zum Befestigen eines Bildaufnahmegerätes (11) aufweist.

7. Vorrichtung nach einem der vorangegangen Ansprüche, dadurch **gekennzeichnet**, daß jedes Fenster (2a, 2b, 2c, 2d) der Maske (2) von einer Markierung (10) umrandet ist, die unter ultravioletter Beleuchtung sichtbar ist.

8. Vorrichtung nach einem der vorhergehenden Ansprüche, dadurch **gekennzeichnet**, daß die Wellenlänge der Ultraviolett-Lichtquelle (3) zwischen 320 und 380 nm liegt.

## Claims

1. Apparatus for measuring the degree of dustiness of a surface (1) by counting particles, the apparatus being characterized in that it comprises a plane mask (2) in the form of a frame delimiting a determined portion (1a) of the surface (1) to be investigated when placed thereon, and a source (3) of ultraviolet light emitting a beam towards the surface portion (1a), which beam is inclined relative to said surface (1) at an angle A lying in the range 30° to 60°.

2. Apparatus according to claim 1, characterized in that the mask (2) has four identical windows (2a, 2b, 2c, 2d).

3. Apparatus according to claim 2, characterized in that the area of each of the windows (2a, 2b, 2c, 2d) is about 25 cm².

4. Apparatus according to any preceding claim, characterized in that it comprises a housing (6) whose base carries the above-mentioned mask (2), one of the walls of the housing being fitted with a support (7) for the ultraviolet light source (3) whose axis is inclined relative to the plane of the mask (2) at an angle lying in the range 30° to 60°, and one of the walls (9) parallel to the mask (2) including an opening (8) for observing the visible radiation emitted in a direction substantially normal to the observed surface portion by the particles (4) situated thereon in response to the incident ultraviolet radiation (3).

5. Apparatus according to claim 4, characterized in that the observation opening provided through the housing includes means for adjusting its size.

6. Apparatus according to claim 4, characterized in that the housing (6) includes means disposed at its observation opening (8) for coupling to camera means (11).

7. Apparatus according to any preceding claim, characterized in that each window (2a, 2b, 2c, 2d) in the mask (2) is surrounded by a mark (10) which is visible under ultraviolet illumination.

8. Apparatus according to any preceding claim, characterized in that the wavelength of the ultraviolet light source (3) lies in the range 320 nanometers to 380 nanometers.

*Fig. 1*

*Fig. 2*